Europäisches Patentamt

European Patent Office

Office européen des brevets

(11) Numéro de publication: **0 256 954**
**A1**

## (12) DEMANDE DE BREVET EUROPEEN

(21) Numéro de dépôt: 87420202.1

(22) Date de dépôt: 24.07.87

(51) Int. Cl.⁴: **A 01 C 7/04**
A 01 C 7/16

(30) Priorité: 25.07.86 FR 8610987
11.06.87 FR 8708313

(43) Date de publication de la demande:
24.02.88 Builetin 88/08

(84) Etats contractants désignés:
BE DE ES FR GB IT NL

(71) Demandeur: Pourey, Anne-Marie
Rue Bruchet Ouroux-sur-Saône
F-71370 Saint-Germain-Du-Plain (FR)

Pourey, Bernard
rue Bruchet Ouroux-sur-Saône
F-71370 Saint-Germain-Du-Plain (FR)

(72) Inventeur: Pourey, Anne-Marie
Rue Bruchet Ouroux-sur-Saône
F-71370 Saint-Germain-Du-Plain (FR)

Pourey, Bernard
rue Bruchet Ouroux-sur-Saône
F-71370 Saint-Germain-Du-Plain (FR)

(74) Mandataire: Guerre, Dominique et al
Cabinet LAURENT et GUERRE B.P. 32
F-69131 Ecully Cedex (FR)

(54) Dispositif de distribution régulière vers le sol de particules,en particulier semoir de précision.

(57) La présente invention concerne un dispositif de distribution régulière vers le sol de particules, et notamment un semoir de précision.

Ce dispositif comprend un bâti (1) , un axe (3), autour duquel sont disposés, et calés en rotation, d'une part une capacité intermédiaire (6) , et d'autre part un cylindre distributeur (2) adjacent.

Le cylindre (2) et la capacité (6) communiquent entre eux par un orifice d'introduction (15d) et des orifices de sortie (15c) , assurant en permanence entre le cylindre et la capacité une circulation permanente et un brassage des particules traitées, à distribuer.

FIG.2

EP 0 256 954 A1

**Description**

DISPOSITIF DE DISTRIBUTION REGULIERE VERS LE SOL DE PARTICULES, EN PARTICULIER SEMOIR DE PRECISION

La présente invention concerne un dispositif de distribution régulière vers le sol de particules.

La présente invention sera explicitée et décrite par référence aux semoirs de précision, auquel cas la charge de particules consiste en des graines ou semences pour cultures maraichères, horticulture, ou culture céréalière.Mais,la portée de la description et des revendications définies ci-après ne saurait être limitée à ce secteur technique,les moyens caractéristiques de la présente invention pouvant être utilisés,sans mofication substantielle, à d'autres fins, par exemple pour épandre de manière régulière sur un sol, notamment un amendement (engrais par exemple), des herbicides, insecticides, ou fongicides, sous forme particulaire.

Selon le brevet DE-C-831 925, on a proposé un semoir de précision comprenant :

a) un bâti fixé à l'extrémité d'un manche ou poignée ;

b) un cylindre distributeur, disposé horizontalement sur le bâti, mobile en rotation autour de son axe, comportant une pluralité de rangées d'orifices d'évacuation des semences, traversant de part en part la paroi du cylindre ; les différentes rangées comportent des orifices de sections respectivement différentes, et chaque rangée est disposée selon un plan transversal et vertical ;

c) un axe ou moyen d'entrainement en rotation du cylindre distributeur, tourillonné sur le bâti, et disposé coaxialement audit cylindre ; à son extrémité opposée à ce dernier, l'axe d'entrainement est solidaire d'une roue avec ergots radiaux, au contact et en prise avec le sol naturel ;

d) un moyen, fixe par rapport au cylindre distributeur, d'introduction des semences à l'intérieur de ce dernier ; ce moyen a la forme d'un entonnoir, dont l'ouverture inférieure débouche dans le cylindre distributeur ;

e) un collecteur des semences évacuées du cylindre distributeur, monté en vis-à-vis de ce dernier sur le bâti, comportant une overture de réception des semences, adjacente aux différentes rangées des orifices d'évacuation ; ce collecteur forme un conduit d'évacuation des semences vers le sol ;

f) une enveloppe rigide de retenue des semences, conformée selon une surface cylindrique, complémentaire à la surface externe du cylindre distributeur, ouverte entre deux génératrices ; cette enveloppe est en contact extérieur avec le cylindre distributeur, et l'ouverture de réception du collecteur est disposée dans l'interstice dégagé entre les deux génératrices de l'enveloppe ; l'enveloppe est réglable, à la fois en translation selon l'axe du cylindre distributeur, et en rotation par rapport à ce dernier.

Un semoir tel que précédemment décrit présente différents inconvénients. D'une part, en fonctionnement, c'est-à-dire lors de la rotation du cylindre distributeur, mis en mouvement par le déplacement du semoir, il est impossible de régler de manière précise le niveau des semences dans le cylindre distributeur ; même si ce dernier tourne régulièrement, il en résulte une distribution irrégulière des graines vers le sol. D'autre part, les graines étant irrégulières, et en poids et en volume, celles-ci ne sont pas suffisamment brassées dans le cylindre distributeur, pour obtenir une charge homogène à l'intérieur de ce dernier ; de la "stratification" de cette charge résulte aussi une distribution irrégulière, les graines les plus grosses ou les plus lourdes étant distribuées plus lentement et plus tard que les graines les plus petites ou les plus légères.

Selon le brevet US-C-2871805, on a décrit un semoir comprenant :

a) un cylindre de transport, mobile en rotation, comportant à sa surface extérieure des alvéoles de réception des graines ;

b) un réservoir d'alimentation, directement au contact, à sa partie inférieure, de la partie supérieure du cylindre de transport ;

c) un équipage comprenant une pluralité de rouleaux libres en rotation, disposés parallèlement à l'axe du cylindre de transport, et distribués autour de la circonférence de ce dernier ; cet équipage est monté de manière souple et mobile par rapport au cylindre de transport, et rappelé vers ce dernier par des ressorts appropriés ;

d) une courroie souple sans fin, ayant la largeur du cylindre de transport, enroulée autour des rouleaux, en contact extérieur avec le cylindre de transport ; lorsque ce dernier tourne vers le bas, la courroie est entrainée vers le bas,et fait tourner les rouleaux ; cette courroie est au contact du cylindre de transport entre deux génératrices, l'une supérieure située au-dessous du réservoir d'alimentation, et l'autre inférieure, au-dessous du cylindre de transport ;

e) un conduit d'évacuation vers le sol, adjacent à sa partie supérieure avec la génératrice inférieure précédemment définie.

Un tel semoir ne permet pas une distribution régulière des graines, car les alvéoles de la roue de transport, en relation avec la courroie souple pouvant s'écarter de ladite roue, acceptent aussi bien des grosses graines que des petites (en nombre plus important par alvéole).

Par ailleurs, un tel semoir est sujet en fonctionnement à différents blocages ou détériorations, des graines pouvant se coincer entre le cylindre de transport et le réservoir d'alimentation.

De manière générale, la présente invention se propose de distribuer des particules de manière régulière, vers le sol, en remédiant aux inconvénients des dispositifs antérieurs discutés précédemment. "Distribution régulière" voulant dire que les particules sont réparties régulièrement entre différentes rangées, éventuellement, et que dans une même rangée, ces mêmes particules sont déposées de manière régulière, l'intervalle séparant les différentes particules, quelque soit leur poids ou leur taille, étant substantiellement le même.

De manière particulière, mais non exclusive, l'invention a pour objet un semoir de précision, présentant de meilleures performances en termes de régularité que les semoirs antérieurs discutés précédemment.

Selon la présente invention, une capacité intermédiaire, allongée, mobile en rotation autour d'un axe, est disposée co-axialement et de manière adjacente au cylindre distributeur, et elle est solidaire en rotation avec le moyen d'entrainement en rotation dudit cylindre distributeur. Cette capacité intermédiaire communique avec le cylindre distributeur, d'une part par un orifice d'entrée vers ce dernier des particules prélevées dans la capacité intermédiaire, et d'autre part par au moins un orifice de sortie du trop-plein de particules vers la capacité intermédiaire, cet orifice de sortie étant situé au-dessous de l'orifice d'entrée, selon la direction radiale passant par ce dernier.

Grâce aux moyens spécifiques de la présente invention, lors du fonctionnement d'un dispositif selon cette dernière, il s'établit une circulation continue de la charge de particules entre le cylindre distributeur et la capacité intermédiaire, cette dernière jouant en particulier le rôle d'un récipient de recyclage vers et hors du cylindre distributeur. Cette circulation continue permet, d'une part d'établir un niveau prédéterminé et constant des particules, dans le cylindre distributeur, quelle que soit la nature des particules traitées, et leur dispersion ou hétérogénéité en poids ou en volume, et d'autre part de brasser en continu ces particules, pour obtenir dans le cylindre distributeur une charge homogène.

Tout ceci aboutit à évacuer par les orifices du cylindre distributeur un nombre régulier de particules.

Dans le cas d'un semoir faisant application de la présente invention, on aboutit à une distribution très régulière des graines dans chaque rangée.

La présente invention est maintenant décrite par référence aux dessins annexés, dans lesquels :

- la figure 1 représente une vue de face d'un semoir selon la présente invention, les pièces suivantes ayant été retirées de la réprésentation afin de faciliter la compréhension du dessin, à savoir le collecteur des semences évacuées du cylindre distributeur, et l'enveloppe ou courroie souple de retenue des graines, au niveau du cylindre ; la position en rotation du cylindre distributeur et de la capacité intermédiaire, choisie pour la réprésentation de la figure 1, correspond à une disposition horizontale de la pièce de ramassage dans la capacité intermédiaire ;

- la figure 2 représente une vue en coupe, selon la ligne II-II de la figure 1, d'un semoir complet, conforme à la figure 1 ;

- la figure 3 représente une vue de face du collecteur faisant partie d'un semoir selon les figures 1 et 2 ;

- la figure 4 représente en perspective la pièce de ramassage utilisée conformément aux figures 1 et 2 ;

- la figure 5 représente, vue de face, l'une des pièces de maintien sur le collecteur de l'un des rouleaux de support de la courroie ;

- la figure 6 représente une vue de face d'un semoir conforme à un autre mode d'exécution de la présente invention, les pièces suivantes ayant été retirées de la représentation afin de faciliter la compréhension du dessin, à savoir le collecteur des semences évacuées par le cylindre distributeur, l'enveloppe ou courroie souple de retenue des graines, et les poulies ou rouleaux assurant la tension et la circulation de la courroie précitée ;

- la figure 7 représente une vue en coupe, selon la ligne VI-VI de la figure 5, d'un semoir complet conforme à cet autre mode d'exécution de l'invention ;

- la figure 8 représente la pièce de ramassage faisant partie du dispositif conforme aux figures 6 et 7 ;

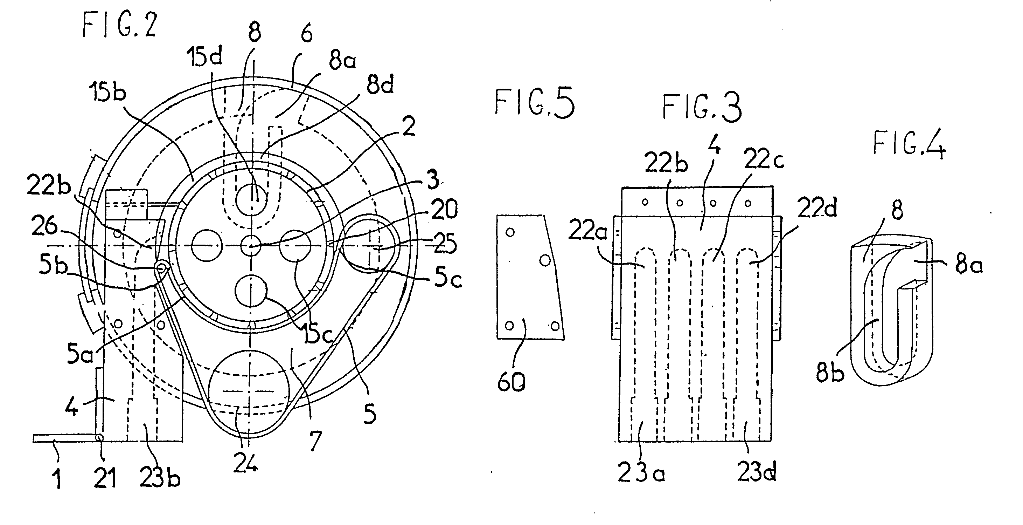

Conformément aux figures 1 à 4, un semoir ou dispositif selon l'invention comporte les pièces ou composants essentiels suivants :
- un bâti (1) ;
- un cylindre distributeur (2) des graines ou semences ;
- un moyen ou axe (3) d'entrainement en rotation du cylindre distributeur (2) ;
- un collecteur (4) des semences évacuées du cylindre distributeur (2) ;
- une enveloppe ou courroie souple (5), pour la retenue des semences vis-à-vis du cylindre distributeur (2) ;
- une capacité intermédiaire (6),contenant une charge de semence à distribuer et servant de réservoir;
- un ensemble (7) de rouleaux assurant le maintien et la tension de la courroie (5) ;
- une pièce de ramassage (8), disposée dans le réservoir intermédiaire (6), pour introduire les semences ramassées dans le cylindre distributeur (2) ;
- un mandrin cylindrique (9), assurant la fermeture du cylindre distributeur (2).

Le bâti (1) est relié au sol par des roues ou cylindres non représentés. Ce bâti peut être déplacé, par des moyens moteurs appropriés, ou tracté ou poussé, par exemple au moyen d'un tracteur agricole.

L'axe d'une roue ou rouleau, tel que précédemment défini, est relié par une chaine (10) à une roue dentée (11), calée en rotation sur l'extrémité de l'axe (3) ; de cette manière, le déplacement en translation du bâti (1) provoque la rotation de l'axe (3), laquelle est strictement proportionnelle à la vitesse de déplacement du bâti (1). Le bâti (1) comporte deux pattes en équerre (12) et (13), servant au support en rotation de l'axe (3), à ses deux extrémités. Le support (13) est démontable et amovible, de manière à permettre un démontage complet du dispositif selon l'invention, par exemple pour changer le cylindre distributeur, en fonction des semences traitées.

La capacité intermédiaire consiste en un cylindre obturé par deux parois transversales (14) et (15), de préférence transparentes, pour visualiser la charge des graines, et dans la capacité intermédiaire, et dans le cylindre distributeur. Cette capacité est calée en rotation sur l'axe (3), d'une part par un moyeu (14a) solidaire par l'extérieur de la paroi (14), et d'autre part par une perforation centrale (15a) dans la paroi (15).

Un orifice (16) est disposé dans la paroi cylindrique de la capacité intermédiaire (6), avec un bouchon (17), de manière à pouvoir introduire dans cette dernière une charge de semence. Une lame (18), disposée en spirale à l'intérieur de la paroi cylindrique de la capacité (6), sert à diriger et rassembler les semences vers la pièce de ramassage (8), lors de la rotation de la capacité (6), comme décrit ci-après.

Le cylindre distributeur (2) est disposé horizontalement, coaxialement à l'axe d'entrainement (3), dans une collerette annulaire (15b), laquelle est située à l'extérieur de la paroi transversale (15), formant cloison entre la capacité (6) et le cylindre (2). Ce cylindre comporte quatre rangées ou plus (19a) à (19d) d'orifices (20) d'évacuation des semences, lesquels traversent de part en part la paroi du cylindre (2). Chaque orifice (20) est évasé vers l'extérieur, au niveau de sa sortie vers l'ouverture de réception (22) correspondante du collecteur (4), de manière à faciliter l'évacuation des graines. Les différentes rangées (19a) à (19d) sont disposées chacune selon une couronne, dans un plan vertical et transversal (ou perpendiculaire) par rapport à l'axe (3).

L'axe (3) est tourillonné sur le bâti (1), par l'intermédiaire des supports (12) et (13), et est solidaire en rotation de la roue (11) précédemment décrite, laquelle est en prise directement ou indirectement avec le sol.

Conformément à la figure 1, on observera que le diamètre du cylindre distributeur (2) est inférieur à celui de la capacité intermédiaire (6) ; en d'autres termes, le volume de la capacité intermédiaire (6) est supérieur à celui du cylindre distributeur (2).

Il résulte de la description précédente que la capacité intermédiaire (6), allongée selon l'axe du cylindre, est mobile en rotation autour de l'axe (3), tout en étant disposée coaxialement et de manière adjacente au cylindre distributeur (2) ; et cette même capacité est solidaire en rotation avec l'axe (3) d'entrainement du cylindre distributeur (2).

La capacité intermédiaire (6) communique avec le cylindre distributeur (2), d'une part par un orifice d'entrée (15d) vers ce dernier, pour l'introduction des particules prélevées dans la capacité intermédiaire au moyen de la pièce de ramassage (8), et d'autre part par trois orifices de sortie (15c), pour l'évacuation du trop-plein de semences vers la capacité intermédiaire (6), retourné à partir du cylindre distributeur (2).

Conformément à la figure 2, on observera qu'au moins l'un des orifices de sortie (15c) est situé au-dessous de l'orifice d'entrée (15d), selon la direction radiale passant par cer dernier. Les orifices (15c) et (15d) consistent en des perforations circulaires réparties autour du centre de la paroi transversale (15).

La pièce de ramassage (8), indépendante ou monobloc avec la paroi transverale (15), est disposée transversalement, à l'intérieur de la capacité (6), selon un rayon de cette dernière. Cette pièce comporte, du côté adjacent à la paroi cylindrique de la capacité (6), une auge (8a) de prélévement des semences, laquelle communique par un conduit radial (8b), du côté opposé à l'auge (8a), avec l'orifice d'entrée (15d) vers le cylindre distributeur (2).

Le collecteur (4) des semences évacuées du cylindre distributeur est monté, de manière amovible en pivotement grace à un axe (21), sur le bati (1), en vis-à-vis du cylindre distributeur (2). Le collecteur (4) comporte à sa partie supérieure quatre ouvertures de réception (22a) à (22d), respectivement adjacentes aux rangées d'orifices d'évacuation (19a) à (19d), et en nombre égal au nombre de rangées (19a) à (19d) du cylindre distributeur. Chaque ouverture (22a) à (22d) communique avec un conduit d'évacuation (23a) à (23d) vers le sol, et plus précisément vers un sillon dans lequel la semence doit être déposée.

L'ensemble (7) comprend trois rouleaux (24), (25) et (26), libres en rotation, disposés parallèlement à l'axe du cylindre distributeur (2), et distribués autour de la circonférence de ce dernier. Les rouleaux (24) et (25) sont montés de manière fixe sur le bâti (1), tandis que le rouleau (26) est monté sur deux pattes (60), dont l'une est montrée à la fig. 5, en vis-à-vis sur le collecteur (4).

L'enveloppe (5) consiste en une courroie souple sans fin, ayant une largeur recouvrant la totalité des rangées (19a) à (19d) des orifices (20) d'évacuation du cylindre distributeur (2). Cette courroie (5) est enroulée autour des rouleaux (24), (25) et (26), elle est entrainée en rotation, par contact, par le cylindre distributeur (2), et entraine elle-même en rotation les rouleaux précités.

Conformément à la figure 2, au contact extérieur du cylindre (2), la courroie (5) forme une surface cylindrique (5a) de retenue des semences, complémentaire de la surface externe du cylindre (2), ouverte entre deux génératrices (5b) et (5c). Les ouvertures de réception (22a) à (22d) du collecteur (4) sont disposées dans l'ouverture délimitée par les génératrices précitées (5b) et (5c).

Conformément à la figure 2, la surface cylindrique (5a) de retenue des semences circonscrit la moitié inférieure de la surface cylindrique externe du cylindre distributeur (2).

Le mandrin cylindrique (9) a une section externe adaptée à la section interne du cylindre distributeur (2). Il est déplaçable en translation à l'intérieur et selon l'axe du cylindre (2), grace à un moyeu (9a) avec vis, et permet ainsi d'obturer par l'intérieur une ou plusieurs rangées (19a) à (19d) des orifices (20) d'évacuation.

En fonctionnement, à partir d'une charge introduite dans le réservoir (6), il s'établit un niveau constant de graines dans le cylindre distributeur (2), comme indiqué précédemment. Pour le bon fonctionnement de l'ensemble réservoir (6) et cylindre (2), il est essentiel que le niveau des graines dans la capacité (6) ne dépasse pas celui des orifices de sortie (15c).

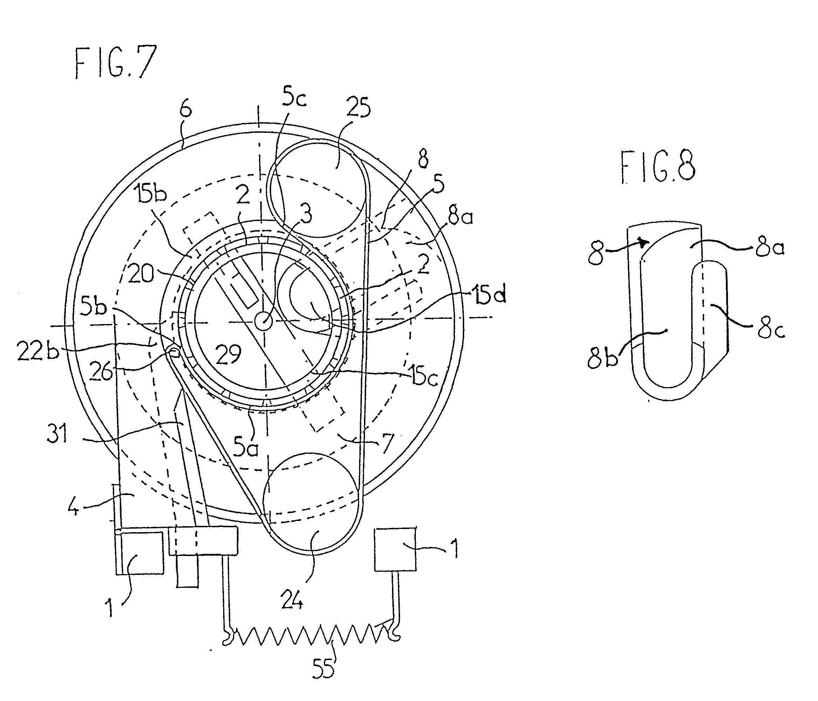

Le mode d'exécution conforme aux figures 5 à 7, diffère de celui décrit précédemment, par les caractéristiques techniques essentielles suivantes.

La capacité intermédiaire (6) a une forme tronconique, dont la plus grande base (15) est située du côté du cylindre distributeur (2). Toutefois, le diamètre de la plus petite base (14) demeure supérieur à celui du cylindre distributeur (2).

L'orifice de sortie (15c), du cylindre distributeur (2), vers la capacité intermédiaire (2), permettant l'évacuation du trop-plein des semences, consiste en une seule et même ouverture circulaire, disposée dans la paroi (15), de diamètre inférieur au diamètre interne du cylindre distributeur (2).

Comme précédemment, la pièce de ramassage (8) demeure fixée sur la paroi (15) à l'intérieur de la capacité (6), mais l'extrémité du conduit (8b) opposée à l'auge (8a) débouche dans l'ouverture circulaire (15c), et forme l'orifice d'entrée (15d) vers le cylindre (2).

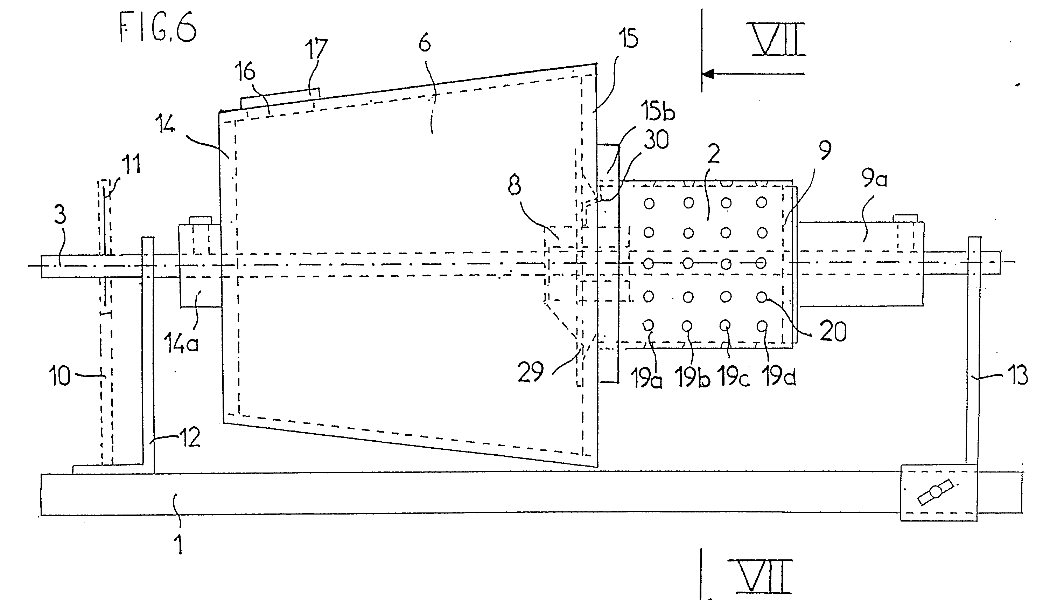

Conformément à la figure 6, on observera que la section de passage totale de l'orifice de sortie (15c) est supérieure à la section de passage de l'orifice d'entrée (15d).

Le collecteur (4), mobile en pivotement par rapport au cylindre (2), est rappelé à distance de ce dernier par un ressort (55), fixé à une extrémité fixe sur le bâti (1), et à une autre extrémité mobile sur le collecteur. Comme le rouleau (26) est monté sur le collecteur, ceci permet de relacher la tension sur la courroie (5), et consécutivement la pression de cette dernière sur le cylindre (2).

La surface cylindrique (5a) de retenue des graines, appartenant à la courroie sans fin (5), circonscrit la surface extérieure du cylindre (2), entre d'une part une génératrice inférieure (5b) située d'un côté du cylindre (2), et d'autre part une génératrice supérieure (5c) située de l'autre côté du cylindre (2), vers le dessus de ce dernier, en passant par le dessous du cylindre (5). La génératrice inférieure (5b) est elle même située au-dessous du niveau des ouvertures de réception (22a) à (22d) du collecteur (4). De cette manière, la courroie (5) enveloppe le plus complétement possible le cylindre (2).

Le mode d'exécution conforme aux figures 4 à 7 diffère encore par les caractéristiques secondaires suivantes :
- une patte diamétrale (29) est disposée dans l'ouverture circulaire (15c), traversée en son centre par l'axe (3), et fixée à ses deux extrémités, à l'intérieur de la capacité (6), sur le rebord annulaire de la paroi (15), de manière à supporter cette capacité (6) sur l'axe (3);
- la sortie (15c) comporte un rebord bisauté vers la capacité (6), de manière à faciliter l'évacuation des graines vers cette dernière ;
- le support en équerre (13) peut être déplacé transversalement, selon l'axe (3) sur le bâti (1) ;
- la pièce de ramassage (8) comporte une extrémité bisautée (8c), à l'opposé du conduit (8d) ;
- une languette (30) métallique faisant ressort, établit un contact électrique entre le cylindre distributeur (5) et l'axe (3), par l'intermédiaire de la patte (29), dans le but d'évacuer vers le sol l'électricité statique produite par le frottement du cylindre (2) avec la courroie (5) en caoutchouc ;
- une pièce (31), bisautée, solidaire du collecteur (4), permet de séparer et diriger les graines pouvant rester collées sur la courroie (5), vers le collecteur (4).

## Revendications

1/ Dispositif de distribution régulière vers le sol d'une charge de particules, comprenant :
a) un bâti (1) ;
b) un cylindre distributeur (2), disposé horizontalement sur le bâti, mobile en rotation autour de son axe, comportant au moins une rangée (19a à 19d) d'orifices (20) d'évacuation des particules, traversant de part en part la paroi du cylindre, disposée selon un plan transversal et vertical ;
c) un moyen (3) d'entrainement en rotation du cylindre, tourillonné sur le bâti, solidaire en rotation d'une roue (11) en prise avec le sol ;
d) un moyen d'introduction (15d) des particules de la charge à l'intérieur du cylindre distributeur ;
e) un collecteur (4) des particules évacuées du cylindre distributeur, monté en vis-à-vis de ce dernier sur le bâti, comportant au moins une ouverture de réception (22a à 22d) adjacente à la rangée d'orifices (19a à 19d) d'évacuation, en relation avec un conduit d'évacuation vers le sol ;
f) une enveloppe (5) conformée au moins en partie selon une surface cylindrique de retenue (5a) des particules , complémentaire à la surface externe du cylindre distributeur, ouverte entre deux génératrices (5b)(5c), en contact extérieur avec ledit cylindre distributeur, et dans l'ouverture de laquelle est disposée l'ouverture de réception (22a) à (22d) du collecteur ;
caractérisé en ce qu'une capacité intermédiaire (6), allongée, mobile en rotation autour d'un axe (3), est disposée coaxialement et de manière adjacente au cylindre distributeur (2), et solidaire en rotation avec le même moyen d'entrainement (3), la capacité intermédiaire communiquant avec le cylindre distributeur, d'une part par un orifice d'entrée (15d) vers ce dernier des particules prélevées dans la capacité intermédiaire, et d'autre part par au moins un orifice de sortie (15c) du trop-plein de particules vers la capacité intermédiai re, situé au-dessous dudit orifice d'entrée, selon la direction radiale passant par ce dernier.

2/ Dispositif selon la revendication 1, caractérisé en ce qu'une pluralité de rouleaux libres (24,25 ,26) en rotation, disposés parallèlement à l'axe du cylindre distributeur (2), et distribués autour de la circonférence de ce dernier, est montée sur le bâti (1), de manière adjacente audit cylindre distributeur, et en de que l'enveloppe est une courroie (5) souple sans fin, ayant une largeur recouvrant au moins la rangée (19a à 19d) des orifices d'évacuation (20),enroulée autour desdits rouleaux, et entrainant ces derniers par frottement.

3/ Dispositif selon la revendication 1, caractérisé en ce que le moyen d'entrainement (3) en rotation consiste en un seul et même axe tourillonné sur le bâti, autour duquel sont montés solidairement en rotation, et la capacité intermédiaire (6), et le cylindre distributeur (2).

4/ Dispositif selon la revendication 3, caractérisé en ce que la capacité intermédiaire (6) et le cylindre distributeur (2) sont séparés par une cloison (15) commune et transversale.

5/ Dispositif selon la revendication 1, caractérisé en ce qu'une pièce de ramassage (8) de la charge de particules est disposée transversalement et selon un rayon de la capacité intermédiaire (6),et comporte,du côté adjacent à la paroi de ladite capacité, une auge (8a) de prélèvement des particules, un conduit radial (8b),et forme du côté opposé à l'auge l'orifice d'entrée (15d) vers le cylindre distributeur.

6/ Dispositif selon la revendication 1, caractérisé en ce que la section de passage totale du ou des orifices de sortie (15c) est supérieure à la section de passage de l'orifice d'entrée (15d).

7/ Dispositif selon la revendication 1, caractérisé en ce que le collecteur (4) est monté sur le bâti de manière mobile en pivotement, et est rappelé à distance du cylindre distributeur (2) par un moyen de rappel (55).

8/ Dispositif selon la revendication 1, caractérisé en ce que la surface cylindrique de retenue des particules (5a) de l'enveloppe circonscrit au moins la moitié inférieure de la surface cylindrique externe du cylindre distributeur (2).

9/ Dispositif selon la revendication 8, caractérisé en ce que la surface cylindrique de retenue des particules (5a) de l'enveloppe circonscrit la surface extérieure du cylindre distributeur (2) entre une génératrice inférieure (5b),située au-dessous du niveau de l'ouverture de réception du collecteur (4),et une génératrice supérieure (5c),située vers le dessus dudit cylindre distributeur, en passant par le dessous du cylindre.

10/ Dispositif selon la revendication 1,caractérisé en ce qu'un mandrin cylindrique (9), ayant une section externe adaptée à la section interne du cylindre distributeur (2), est déplaçable en translation à l'intérieur et selon l'axe dudit cylindre, pour obturer par l'intérieur au moins une rangée des orifices d'évacuation.

11/ Dispositif selon la revendication1,caractérisé en ce que la capacité intermédiaire (6) a une forme tronconique, dont la plus grande base (15) est située du côté du cylindre distributeur.

12/ Dispositif selon la revendication 1,caractérisé en ce que des moyens (30) sont prévus pour évacuer vers le sol l'électricité statique générée par le frottement du cylindre distributeur (2) et de la courroie (5).

13/ Dispositif selon la revendication 1,caractérisé en ce que chaque orifice (20) d'évacuation a, au niveau de sa sortie vers l'ouverture de réception (22) correspondante du collecteur (4), une forme évasée vers l'extérieur.

0256954

FIG.2  FIG.3  FIG.4  FIG.5

0256954

FIG.6

0256954

FIG.8

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| Y | FR-A-2 349 520 (INTERNATIONAL HARVESTER CO.) * Pages 4-6; figures 3-5 * | 1 | A 01 C 7/04 A 01 C 7/16 |
| A | | 5,8 | |
| Y | FR-A- 641 172 (I.G. FARBENINDUSTRIE AG) * Page 1, lignes 38-62; figures 1,2 * | 1 | |
| D,A | US-A-2 871 805 (BEHNEN) * Colonne 2, lignes 6-72; colonne 3, lignes 1-56; figures 1-6 * | 1,2,8, 9 | |
| D,A | DE-C- 831 925 (OHLSENS) * Page 2, lignes 50-126; pages 3,4; figures 1-9 * | 1 | DOMAINES TECHNIQUES RECHERCHES (Int. Cl.4) A 01 C |
| A | FR-A- 564 754 (PEREDA) * Page 1, lignes 44-60; page 2, lignes 1-40; figures 1,6 * | 1,10 | |

Le présent rapport de recherche a été établi pour toutes les revendications

| Lieu de la recherche LA HAYE | Date d'achèvement de la recherche 02-11-1987 | Examinateur VERMANDER R.H. |
|---|---|---|